# EUROPEAN PATENT APPLICATION

(11) **EP 1 802 068 A1**
(43) Date of publication of application: **27.06.2007**
(21) Application number: 05027893.6
(22) Date of filing: 20.12.2005
(51) Int. Cl.: H04L 29/06

(54) **Method and system for the condition-dependent distribution of information and alerts to telecommunication subscribers**

(71) Applicant: SIEMENS AKTIENGESELLSCHAFT, 80333 München (DE)
(72) Inventor: Papadimitriou, Dimitris, Dr., 11254 Athen (GR)

(57) **Abstract**

The present invention relates to a method and system for distributing information and alerts to subscribers of a telecommunications network (100) based on distribution control parameters specifying geographical area, an IP-range, or generally a set of subscribers. Information and/or alerts are assembled at an information provider's or alert provider's facility (102). A set of terminals (108) is then determined based on the distribution control parameters. A presence database (110) is queried to determine a subset of said set of subscriber terminals (108) at which subscribers are available. Finally, the assembled information and/or alert is transmitted to each subscriber terminal (108) in the subset.

## Description

The present invention relates to a method and system for conditional distribution of information and alerts to telecommunication subscribers.

In telecommunications networks there exists a need for distributing information to individual users, groups of users, or all users in accordance with specific selection criteria such as the presence in a given geographic area. Such information may include area-based advertising (often also referred to as location based advertising), announcement of services to users entering/leaving the area, or emergency notification alerts/alarms.

Presently, calls such as alarm calls are transmitted to the user irrespective of the subscriber's current status, leading to repeated automatic attempts to provide an alarm announcement to unavailable subscribers, wherein such repeated attempts may entail significant network loads.

Furthermore, in traditional wireline networks, a significant amount of network load could result from providing alarm announcements to subscribers not currently at home.

Finally, alert/alarm announcements could not be provided to the hearing impaired in traditional wireline networks.

It is therefore an object of the present invention to provide a method and a system for distributing information and alerts to telecommunication subscribers that avoid these problems.

Accordingly, there is provided by the invention a method for providing information and/or alerts to subscribers of a telecommunications network, comprising the steps of:
- assembling information and/or an alert at an information provider's or alert provider's facility;
- determining a set of subscriber terminals in accordance with distribution control parameters provided by the information provider's or alert provider's facility;
- querying a presence database to determine a subset of said set of subscriber terminals at which subscribers are available; and
- transmitting the assembled information and/or alert to each subscriber terminal in the subset.

The invention also provides a system for implementing the inventive method.

It is an advantage of the present invention that, by querying the presence database, only subscriber terminals are alerted at which subscribers are available, e.g. terminals at which subscribers have actively registered and which are accepting calls. Thus a high network load caused by repeated attempts to reach subscribers not currently present at their terminals (e.g. subscribers not at home) can be avoided.

In an embodiment of the invention, the each terminal's media capabilities are determined and a media format that is compatible with a terminal's capabilities is chosen for transmitting the information or alert to that terminal. An advantage thereof is that information, and alerts or alarms in particular, may be conveyed to subscribers with disabilities by selecting a media format which is compatible with such subscribers' (preset) media preferences.

In the following, embodiments of the invention will be described in detail with reference to a drawing.

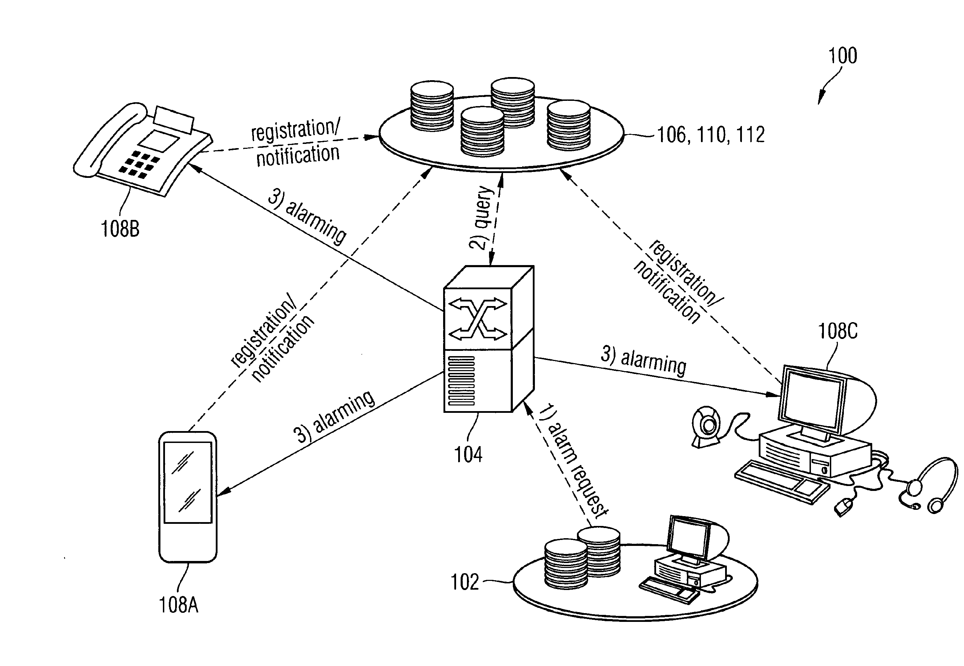

In the figure, there is schematically shown a telecommunications network 100 comprising an information provider's service center 102, an alarm control center or information distribution control center 104, several subscriber terminals 108A-C, and a joint database server 106, 110, 112, in the preferred embodiment comprising a location database 106, a presence database 110 and, optionally, a terminal capabilities database 112. Note that said databases may also be implemented by way of separate database servers.

The alarm control center or information distribution control center 104 may comprise an application server for controlling the information distribution function and a media server for providing the actual information and, optionally, a conversion function for converting information available in a given media format into any other media format as required for a given terminal 108.

For illustrative purposes, a first terminal 108A is shown to be a smartphone, i.e., a device primarily designed for voice and text communication. A second terminal 108B is shown to be a standard telephone set, i.e., a device having only voice capabilities. And a third terminal 108C is shown to be a personal computer, i.e., a device capable of handling (interactive) video communication, text-based communication, and voice communication.

In operation of the preferred embodiment, each time a subscriber registers at a terminal, which in turn leads to the respective terminal's registration in the network, the location database of joint presence and location server is updated with the geographic location data of the user. Such information may, for example, be provided in accordance with IETF RFC 3693 "GEOPRIV requirements".

The location data may be determined and provided in accordance with one or more of a number of well-known methods, for example, by using a GPS enabled terminal for directly providing GPS position data, or by using an approach that maps the subscriber's domain to a location, as shown in IETF RFC 3825 "Dynamic Host Configuration Protocol Option for Coordinate-based Location Configuration Information".

Obviously, a subscriber's location information is sensitive data and as such will be subject to statutory and regulatory privacy protection. Consequently, the location database will be of a design that meets the requirements as set forth by such statutes and regulatory authorities.

The joint presence and location server also holds presence information of each subscriber. Such presence service may, for example, be implemented in accordance with IETF RFC 3856, "A Presence Event Package for the Session Initiation Protocol"; and/or in accordance with ETSI TS 122.141, "3rd Generation Partnership Project; Universal Mobile Telecommunications System (UMTS); Presence Service; Stage 1".

Whenever the presence status of a user changes (e.g. available --> busy), the presence database in joint presence and location server is notified about that change.

When a request for alarming (denoted "1" in the figure) subscribers having at least one common attribute, such as subscribers currently in a specific geographic region or who have been busy for a long time, arrives at the alarm control center 104, then a query (denoted "2") is made, in the preferred embodiment to the joint presence and location server, to identify, among all terminals, a set of terminals sharing said common attribute as specified by one or more distribution control parameters supplied to alarm control center 104. For example, all terminals inside the specific region currently serving subscribers may be selected in accordance with distribution control parameters specifying the region. Optionally, the available means of communication (i.e., media) to each terminal may also be obtained from the joint database server, wherein the media capabilities may either be part of the presence information or stored independently of presence information.

Based on the result obtained from said query, the alarm control center 104 sends alarm notifications to all subscriber terminals that meet the distribution control parameters, e.g., are within the geographic area, and for which the presence information indicates availability of a subscriber. Alarm notifications may be sent in audible form, for example in the form of an announcement if voice communication is possible; in readable format, for example in the form of a SMS or an email if text-based communication is available, and/or in otherwise visible form, for example in the form of a video message if video communication is available.

The data in the capabilities database 112 may be arranged such that it reflects subscriber preferences rather than or in addition to terminal capabilities in order to allow subscribers to specify a preferred notification format.

Alternatively, the terminals' media capabilities or media preferences may be stored in and determined from the terminals directly by a negotiation process between the alarm control center 104 and each terminal 108A-C using well-known protocol techniques.

In case the alerting functionality comprises emergency information then the corresponding communication sessions may preferably have prioritized access to resources over "ordinary" sessions, including but not limited to an override function that may first disconnect an active call or session of lower priority and then establish the high priority emergency call or session.

If several media formats are available for communicating with a given terminal, for example audio, video, and text in the case of third terminal 108C, then the most suitable media format may be determined based on message content and/or user preference. It is also possible to transmit at least one audible media format and at least one visible media format in order to allow subscribers with impairments to access the information even if no corresponding user preference can be determined. Also, some part of the information can be transmitted most effectively in a specific one of the available media formats, for example information regarding a meeting point in the form of a graphical map.

The actual transmission (denoted "3" in the figure) of the information or alert from alarm control center 104 to terminals 108 may be accomplished using well-known broadcast techniques, for example point-to-multipoint communication and/or methods similar to those described in 3GPP TS 22.146, "Multimedia Broadcast/Multicast Service; Stage 1".

Thus, a method and system have been described which allow the flexible sending of information and/or alerts/alarms to subscribers in accordance with distribution control parameters which may represent a variety of conditions including but not limited to presence in a geographic region. The method and system are capable of using a variety, and plurality where useful, of media formats. The invention avoids "blind" communication and unnecessary network load by not allowing communication attempts towards unavailable users (e.g., busy or absent users), thus making the communication attempt faster and more efficient.

The invention may advantageously be applied in the following exemplary scenarios:
- Emergency service: Due to a forecast for dangerous weather conditions, a request for alarming a holiday village arrives at the alarm control centre 104. The alarm control centre 104 interrogates the presence and location databases 106, 110 about users that are inside the geographic region of the village and their presence status.
   Based on the received information the alarm control centre sends an emergency alarming notification to each user in the form of a voice announcement, a text message, a "high-importance" e-mail, or any other suitable format.
   In addition, an informative video with instructions on how to react in specific situations that may arise as a result of the weather conditions may be sent to users having terminals with corresponding capabilities.
- Area-based advertising: A company or non-profit organization organizes various cultural events in many cities across the country. Users are provided with an option to subscribe to a service so that he/she can be informed a number of days in advance of one of these events taking place in his/her the city of residence. Hence, each time that such an event is to take place, a request for informing/alerting all subscribers of this particular service arrives at the alarm control center 104. The alarm control center interrogates the presence and location server about users that are in the region of the city and their presence status and also their subscription status relating to said information service. Based on the received information the alarm control centre may send the notification in the form of a text message, and may also send a map of the event's location if provided by the information service provider.
- Controlled shutdown: The present invention may be used to alert subscriber terminals service dependent or feature dependent. This allows the sending of an alert or notification, for example relating to a service interruption such as a programmed router power off, to all terminals affected.
- Information distribution: All employees of a company may belong to an IP Centrex group. The company's Human Resource department may compile information or alerts informing the employees about company news, important decisions, etc. Human resources may also provide the distribution control parameters, for example to ensure that certain information is only available to upper management. Distribution control will then determine all terminals that meet the distribution control parameters and which are currently accepting calls (i.e., where subscribers are not currently in a meeting or otherwise engaged). Of course, the entire IP Centrex group may also be selected as the set of subscribers, of which the subset of available subscribers is then determined. Of course, alerts may also be sent to employees who are mobile subscribers in a Fixed-Mobile Convergence environment.

## Claims

1. A method for providing information and/or alerts to subscribers of a telecommunications network (100), comprising the steps of:
- assembling information and/or an alert at an information provider's or alert provider's facility (102);
- determining a set of subscriber terminals (108) in accordance with distribution control parameters provided by the information provider's or alert provider's facility (102) ;
- querying a presence database (110) to determine a subset of said set of subscriber terminals (108) at which subscribers are available; and
- transmitting the assembled information and/or alert to each subscriber terminal (108) in the subset.

2. The method of claim 1, wherein the step of determining the set of subscriber terminals determines a set of subscriber terminals within a geographical area by querying a location database (106), wherein the geographical area is represented by some or all of said distribution control parameters.

3. The method of any of the preceding claims, further comprising the steps of:
- determining the media capabilities or media preferences for each terminal (108) in the subset; and
- providing, for each terminal (108), a format of the assembled information and/or alert which is compatible with the media capabilities or media preferences, for transmission to the terminal (108).

4. The method of any of the preceding claims, wherein the steps of querying are combined into one query to a combined database (106, 110, 112).

5. A system (104) for providing information and/or alerts to subscribers of a telecommunications network (100), comprising:
- means for receiving information and/or an alert from an information provider's or alert provider's facility (102);
- means for receiving distribution control parameters;
- means for determining a set of subscriber terminals (108) in accordance with the distribution control parameters;
- means for querying a presence database (110) to determine a subset of said set of subscriber terminals (108) at which subscribers are available; and
- means for transmitting the information and/or alert to each subscriber terminal (108) in the subset.

6. The system of claim 5, wherein the means for determining the set of subscriber terminals determine a set of subscriber terminals within a geographical area by querying a location database (106), wherein the geographical area is represented by some or all of said distribution control parameters.

7. The system of any of the preceding claims, further comprising:
- means for determining the media capabilities or media preferences for each terminal (108) in the subset; and
- means for providing, for each terminal (108), a format of the assembled information and/or alert which is compatible with the media capabilities or media preferences, for transmission to the terminal (108).

8. The system of any of the preceding claims, further comprising means for performing the querying operations in one query to a combined database (106, 110, 112).
